# EUROPÄISCHE PATENTSCHRIFT

(11) **EP 2 577 010 B1**
(45) Veröffentlichungstag und Bekanntmachung des Hinweises auf die Patenterteilung: **10.12.2014**
(21) Anmeldenummer: 11720086.5
(22) Anmeldetag: 16.05.2011
(51) Int. Cl.: F01N 3/20

(54) **FLUIDSPEICHEREINRICHTUNG**
FLUID STORAGE DEVICE
DISPOSITIF DE STOCKAGE DE FLUIDE

(30) Priorität: 27.05.2010 DE 102010029335
(43) Veröffentlichungstag der Anmeldung: 10.04.2013
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2011/057819
(87) Internationale Veröffentlichungsnummer: WO 2011/147703

(56) Entgegenhaltungen:
- EP-A1- 1 925 354
- WO-A1-2007/141312
- DE-A1-102006 048 721
- DE-A1-102008 042 954

## Beschreibung

### Stand der Technik

Die Erfindung betrifft eine Fluidspeichereinrichtung zur Speicherung eines Fluids, insbesondere Reduktionsmittels, mit einem Fluidtank und einem Filter zur Filtration eines in dem Fluidtank bevorratbaren Fluids.

Fluidspeichereinrichtungen der eingangs genannten Art sind aus dem Stand der Technik bekannt. Sie werden beispielsweise für Kraftwagen mit Brennkraftmaschinen eingesetzt. Bei derartigen Kraftwagen muss aufgrund der in den nächsten Jahren anstehenden verschärften Abgasgesetzgebung unter anderem der Schadstoff NOₓ reduziert werden. Eine Vorgehensweise, die dabei zur Anwendung kommt, ist das SCR-Verfahren, bei welchem der Schadstoff NOx unter Zuhilfenahme eines Fluids, insbesondere eines (flüssigen) Reduktionsmittels, zu N₂ und H₂O reduziert wird, wobei eine selektive katalytische Reduktion abläuft. Das Reduktionsmittel wird von einem Fördermittel, beispielsweise eine Pumpe aufweisend, durch eine Leitung von dem Fluidtank zu einem Dosiermodul transportiert. Üblicherweise beinhaltet der Fluidtank einen Sumpf, also eine tiefste Stelle, aus dem über einen Filter das Reduktionsmittel angesaugt wird. Damit der Filter bei tiefen Temperaturen rasch aufgetaut werden kann, ist er unterhalb eines Heizmittels positioniert. Das Fördermittel und das Dosiermodul, welches beispielsweise ein Dosierventil aufweist, sind konstruktionsbedingt schmutzempfindlich, weshalb der Filter eine geringe Maschenweite aufweisen muss, um bereits kleine Schmutzpartikel aus dem Reduktionsmittel herauszufiltern.

Um dennoch einen geringen Druckverlust des Filters gewährleisten zu können, muss dieser eine große Oberfläche aufweisen. Gleichzeitig soll über den Filter auch bei niedrigem Füllstand des Reduktionsmittels in dem Fluidtank effektiv das Reduktionsmittel angesaugt werden können. Daher ist der Filter üblicherweise sehr flach gebaut. Zusammen mit der großen Oberfläche bedeutet dies, dass der Filter große laterale, jedoch nur geringe vertikale Abmessungen aufweist. Eine solche Konzeption des Filters erlaubt es zudem, den Filter auch bei den niedrigen Füllständen des Reduktionsmittels mittels der Heizung effektiv aufzutauen.

Fluidspeichereinrichtungen, welche den vorstehend beschriebenen Filter aufweisen, sind aufgrund der Filtergröße nur für einen Einsatz in Pkw geeignet. Der Filter ist üblicherweise in dem Sumpf angeordnet, also gerade dort, wo sich Schmutzpartikel bevorzugt ablagern. Das Reduktionsmittel, welches beispielsweise eine wässrige Harnstofflösung ist, altert mit der Zeit und führt zu einer verstärkten Korrosion an Metallen und Kunststoffen. Wird das Reduktionsmittel in nicht dafür vorgesehenen Behältern gelagert, werden diese angegriffen und teilweise zersetzt. Damit reichert sich das Reduktionsmittel mit Schmutzpartikeln an, welche sich bevorzugt im Bereich des Sumpfes ablagern, wo der Filter positioniert ist.

Wird als Reduktionsmittel die wässrige Harnstofflösung verwendet, so liegt der Gefrierpunkt bei etwa -11 °C. Gefriert das Reduktionsmittel, so ist es mittels der Heizung auftaubar. Aufgrund der dabei auftretenden Auftau- und Wiedereinfrierzyklen können in dem gefrorenen Reduktionsmittel, aufgrund der bei dem Gefrieren auftretenden Ausdehnung um etwa 10 % während des Phasensprungs von flüssig zu fest, unkontrollierte Risse entstehen, welche den Filter beschädigen können. Bei einer solchen Beschädigung können dem Filter nachgeschaltete Komponenten aufgrund der nun nicht mehr durch das Filter herausgefilterten Schmutzpartikel beschädigt werden und somit funktionsunfähig gemacht werden. Besonders kritisch sind hierbei lange und schmale Zellulosefasern, die sich in Pumpenventilen des Fördermittels verhaken können. Hinzu kommt, dass die Fluidspeichereinrichtung üblicherweise in Bodennähe angeordnet ist. Beispielsweise durch bei einer Bewegung des Kraftwagens auftretenden Fahrtwind kann ein plötzliches Gefrieren des Reduktionsmittels, so genanntes Schockgefrieren, auftreten. Ein kontrolliertes Einfrieren in der Nähe des Filters, bei welchem keine Risse in dem gefrorenen Reduktionsmittel auftreten, ist somit kaum realisierbar.

Um den Filter gegenüber dem Gefrieren unempfindlich auszubilden, wird der Filter üblicherweise relativ klein ausgeführt, so dass er eisdruckfest ist. Dies verhindert jedoch den Einsatz für größere Brennkraftmaschinen, beispielsweise für einen Einsatz in Lkw, weil hier eine deutlich größere Durchflussrate (Durchflussmenge pro Zeiteinheit) des Reduktionsmittels realisiert werden muss und somit der Filter erheblich vergrößert werden müsste. Dabei muss auch berücksichtigt werden, dass sich die Filterung aufgrund eines möglicherweise auftretenden Schwappens des Fluids in einer turbulent bewegten Flüssigkeit abspielt, was bedeutet, dass das Fluid permanent homogen mit den Schmutzpartikeln durchmischt ist.

Aus der DE 10 2008 042 954 A1 ist eine Fluidspeichereinrichtung mit einem Filtersieb bekannt, welches in einem Innenraum eines Gehäuses angeordnet ist.

### Offenbarung der Erfindung

Demgegenüber weist die Fluidspeichereinrichtung mit den Merkmalen des Anspruchs 1 den Vorteil auf, dass sie auch zur Realisierung größerer Durchflussmengen pro Zeiteinheit verwendbar ist. Dabei soll der Filter weiterhin vergleichsweise klein und damit eisdruckfest ausgebildet sein. Dennoch sollen auch bei großen Durchflussraten Schmutzpartikel effektiv und wirksam aus dem Fluid beziehungsweise dem Reduktionsmittel herausgefiltert werden können. Zu diesem Zweck wird mindestens eine Schmutzfalle mit dem kleinen, strömungstechnisch nachgeschalteten Filter kombiniert. Dies wird erfindungsgemäß erreicht, indem der Filter in einem Innenbereich eines in dem Fluidtank angeordneten Gehäuses vorgesehen ist und das Gehäuse mindestens eine Zuführöffnung zur Zuführung von Fluid aus dem Fluidtank in den Innenbereich aufweist, wobei die Zuführöffnung in dem Fluidtank bodenbeabstandet angeordnet ist. Der Filter ist also in dem Gehäuse vorgesehen, wobei dem Gehäuse lediglich über seine Zuführöffnung Fluid aus dem Fluidtank zuführbar ist. Das Gehäuse soll in dem Fluidtank angeordnet sein. Die Zuführöffnung ist also nicht, wie aus dem Stand der Technik bekannt, bodennah angeordnet. Vielmehr soll die Zuführöffnung derart an dem Gehäuse vorgesehen sein, dass sie vollständig von einem Boden beziehungsweise einer Bodenfläche des Fluidtanks beabstandet ist. Dabei ist vorgesehen, dass der Filter in einem Filterraum eines Filtergehäuses angeordnet ist, welches in dem Gehäuse vorgesehen ist. Der Filter ist demnach nicht unmittelbar In dem Gehäuse angeordnet, sondern zusätzlich von dem Filtergehäuse umschlossen, welches in dem Gehäuse angeordnet ist. Der Filter befindet sich dabei in dem Filterraum des Filtergehäuses. Es ist dabei nicht notwendig, jedoch vorteilhaft, wenn das Filtergehäuse vollständig von dem Gehäuse umschlossen ist. Mittels des Filtergehäuses wird eine weitere Beruhigung des Fluids und somit ein zusätzliches Absetzen der Schmutzpartikel erreicht. Das Fluid gelangt demnach durch die Zuführöffnung aus dem Fluidtank in den Innenbereich des Gehäuses. In dem Innenbereich ist das Filtergehäuse mit dem von ihm eingeschlossenen Filterraum angeordnet. Das Fluid kann nun aus dem Innenbereich weiter in den Filterraum des Filtergehäuses strömen. Nach dem Einströmen des Fluids durch die Zuführöffnung in den Innenbereich des Gehäuses findet somit eine erste Beruhigung des Fluids statt. Noch in dem Fluid befindliche Schmutzpartikel werden sich somit in dem Innenbereich des Gehäuses absetzen. Anschließend wird das Fluid aus dem Innenbereich in den Filterraum des Filtergehäuses einströmen und den Filter zur Filtration des Fluids durchlaufenDabei ist vorgesehen, dass das Filtergehäuse eine Einströmöffnung aufweist, über welche der Filterraum des Filtergehäuses mit dem Innenbereich des Gehäuses fluidverbunden ist, wobei die Einströmöffnung bodenbeabstandet ist. Selbstverständlich können auch mehrere Einströmöffnungen vorgesehen sein. Von Bedeutung ist hierbei, dass die Einströmöffnung wiederum bodenbeabstandet ist. Kein Bereich der Einströmöffnung steht demnach in Kontakt mit einem Boden des Gehäuses, sondern liegt vielmehr von diesem beabstandet vor. Auf diese Weise können sich die Schmutzpartikel auf dem Boden des Gehäuses absetzen und gelangen nicht durch die Einströmöffnung in den Filterraum des Filtergehäuses.Dabei ist vorgesehen, dass das Filtergehäuse zur Bodenbeabstandung der Einströmöffnung mindestens einen Standfuß aufweist. Über den Standfuß stützt sich das Filtergehäuse auf dem Boden des Gehäuses ab. Zusätzlich kann über den Standfuß auch eine Befestigung des Filtergehäuses an dem Gehäuse erreicht werden. Der Standfuß ist beispielsweise noppenartig ausgebildet, so dass er sich ausgehend von dem Filtergehäuse hin zu dem Gehäuse verjüngt. Auf diese Weise wird durch eine Verengung des Durchströmungsquerschnitts in Be reichen, welche dem Filtergehäuse näher sind, eine höhere Strömungsgeschwindigkeit erreicht, als in Bereichen, welche von dem Filtergehäuse weiter entfernt sind. Die Schmutzpartikel werden sich dabei bevorzugt im Bereich der niedrigeren Strömungsgeschwindigkeit, also entfernt von dem Filtergehäuse und damit auf dem Boden des Gehäuses absetzen. Sie können demnach nicht mehr durch die Einströmöffnung in das Filtergehäuse beziehungsweise den Filterraum des Filtergehäuses gelangen. Bevorzugt sind mehrere Standfüße vorgesehen.Dabei ist vorgesehen, dass die Einströmöffnung, insbesondere in lateraler Richtung, auf der der Zuführöffnung abgewandten Seite des Filtergehäuses oder zentral an dem Filtergehäuse vorgesehen ist. Um ein besonders effizientes Absetzen der Schmutzpartikel in dem Innenbereich des Gehäuses zu erreichen, ist die Einströmöffnung auf der der Zuführöffnung abgewandten Seite des Filtergehäuses angeordnet. Alternativ kann auch eine zentrale Anordnung an dem Filtergehäuse vorgesehen sein. Auf diese Weise wird der Weg, welchen das durch die Zuführöffnung einströmende Fluid bis hin zu der Einströmöffnung zurücklegen muss, maximiert. Diese Maximierung ist besonders bevorzugt in lateraler Richtung des Gehäuses beziehungsweise des Filtergehäuses vorgesehen. Dabei ist es besonders vorteilhaft, wenn der mindestens eine Standfuß, bevorzugt mehrere Standfüße, in dem Strömungsweg zwischen der Zuführöffnung und der Einströmöffnung angeordnet sind.Dabei ist vorgesehen, dass die Einströmöffnung derart ausgebildet ist, dass in den Filterraum einströmendes Fluid auf ein Prallelement gerichtet ist, welches strömungstechnisch vor dem Filter angeordnet ist. In dem Filterraum des Filtergehäuses ist das Prallelement angeordnet. Dabei sind die Einströmöffnung und das Prallelement derart zueinander ausgerichtet, dass das durch die Einströmöffnung in den Filterraum des Filtergehäuses einströmende Fluid auf das Prallelement gerichtet ist. Bevorzugt ist dabei eine senkrechte Anströmung des Prallelements, eine Flächennormale der Einströmöffnung ist demnach parallel zu einer Flächennormalen einer Prallfläche des Prallelements. Bevorzugt ist das Prallelement dabei in geringer Höhe über der Einströmöffnung vorgesehen. Durch den geringen Abstand von Einströmöffnung und Prallelement werden lange. Schmutzpartikel, insbesondere Schmutzfasern, in eine bestimmte Ausrichtung gedrängt. Diese Ausrichtung ist dabei derart vorgesehen, dass die Schmutzpartikel dem strömenden Fluid eine möglichst geringe Angriffsfläche bieten, so dass sie sich wiederum in dem Filterraum des Filtergehäuses absetzen können. Das Prallelement soll strömungstechnisch vor dem Filter angeordnet sein. Das Fluid trifft also zunächst auf das Prallelement und strömt erst anschließend in Richtung des Filters weiter. Durch das Prallelement werden demnach die Schmutzpartikel zunächst ausgerichtet, bevor sie auf den Filter treffen können.

Bevorzugt kann es dabei vorgesehen sein, dass die Zuführöffnung zusätzlich von dem Boden des Fluidtanks abgewandt ist. Dies kann beispielsweise realisiert werden, indem die Zuführöffnung oben liegend an dem Gehäuse angeordnet wird. Auf diese Weise wird zumindest teilweise verhindert, dass Schmutzpartikel aus dem Fluidtank beziehungsweise aus einem Sumpf des Fluidtanks durch die Zuführöffnung in den Innenbereich des Gehäuses gelangen und somit zu dem Filter gelangen könnten. Grundgedanke bei der Fluidspeichereinrichtung ist demnach, den kleinen, eisdruckfesten Filter beizubehalten und mindestens eine Schmutzfalle strömungstechnisch vor dem Filter anzuordnen, so dass Schmutzpartikel erst gar nicht bis hin zu dem Filter gelangen. Die Schmutzpartikel werden in der Schmutzfalle gefangen und es wird letztendlich eine Sedimentierung auftreten, durch welche die Schmutzpartikel gehalten werden. Das Fluid, welches sich in dem Fluidtank befindet, wird in dem Gehäuse, welches ein kleineres Volumen aufweist als der Fluidtank, gefangen und beruhigt. Somit kann Fluid durch den Filter aus dem Gehäuse beziehungsweise dem Fluidtank entnommen werden, auch wenn das Fluid in dem Fluidtank durch externe Bewegungen angeregte Schwappbewegungen ausführt. Das Gehäuse ist bevorzugt aus Kunststoff ausgebildet. Somit wird die isolierende Wirkung des Kunststoffs ausgenutzt, um ein Einfrieren des Fluids zu verlangsamen beziehungsweise zu kontrollieren.

Eine Weiterbildung der Erfindung sieht vor, dass die Zuführöffnung an einem, insbesondere trichterförmig ausgebildeten, Zuführstutzen des Gehäuses vorgesehen ist. Der Zuführstutzen erstreckt sich von einem Grundkörper des Gehäuses, in welchem der Innenbereich und der Filter vorgesehen sind, weg. Vorzugsweise ist es vorgesehen, dass der Zuführstutzen sich ausgehend von dem Gehäuse in eine Richtung erstreckt, welche von dem Boden des Fluidtanks abge wandt ist. Die Zuführöffnung soll nun an dem Zuführstutzen vorgesehen sein, so dass die bodenbeabstandete Anordnung der Zuführöffnung realisiert ist. Besonders vorteilhaft ist es, wenn der Zuführstutzen zumindest bereichsweise trichterförmig ausgebildet ist. Auf diese Weise kann dem Innenbereich des Gehäuses besonders zuverlässig das Fluid aus dem Fluidtank zugeführt werden. Zudem können durch die Trichterform des Zuführstutzens eventuell von dem Boden des Fluidtanks beziehungsweise aus dem Sumpf des Fluidtanks aufsteigende Schmutzpartikel von der Zuführöffnung weg gedrängt werden.

Eine Weiterbildung der Erfindung sieht vor, dass das Gehäuse in einer Vertiefung des Fluidtanks angeordnet ist. Um auch bei niedrigem Füllstand des Fluids in dem Fluidtank ein zuverlässiges Zuführen von Fluid aus dem Fluidtank in den Innenbereich des Gehäuses zu gewährleisten, ist in dem Fluidtank die Vertiefung vorgesehen, welche vorzugsweise die tiefste Stelle des Fluidtanks darstellt. In dieser Vertiefung sammelt sich somit das Fluid, welches sich noch in dem Fluidtank befindet. In Abhängigkeit von einem zu erwartenden Verschmutzungsgrad des Fluids kann die Zuführöffnung ebenfalls in der Vertiefung des Fluidtanks oder oberhalb der Vertiefung angeordnet sein. Bei einer Anordnung der Zuführöffnung oberhalb der Vertiefung, werden sich die Schmutzpartikel vorzugsweise in der Vertiefung ansammeln.

Eine Weiterbildung der Erfindung sieht vor, dass die Vertiefung - im Querschnitt gesehen - breiter ist als das Gehäuse, wobei eine Schmutzpartikelaufnahmekammer gebildet ist. Wenn das Gehäuse in der Vertiefung des Fluidtanks angeordnet ist, ist demnach zwischen einer Außenwand des Gehäuses und einer Innenwand der Vertiefung die Schmutzpartikelaufnahmekammer gebildet. Vorzugsweise liegt diese an der tiefsten Stelle des Fluidtanks vor. Auf diese Weise können sich Schmutzpartikel, welche in dem Fluid vorhanden sind, in der Schmutzpartikelaufnahmekammer absetzen. In diesem Fall ist es besonders sinnvoll, wenn die Zuführöffnung oberhalb der Vertiefung angeordnet ist. Somit treten in der Schmutzpartikelaufnahmekammer keine oder lediglich geringe Fluidbewegungen auf, welche den in der Schmutzpartikelaufnahmekammer befindlichen Schmutz beziehungsweise die Schmutzpartikel wieder aus dieser heraus bewegen können.

Eine Weiterbildung der Erfindung sieht eine Heizung vor, welche an dem Gehäuse, insbesondere im Bereich einer Ansaugleitung und/oder des Zuführstutzens, angeordnet ist. Mit der Heizung kann das Gehäuse beziehungsweise das das Gehäuse in dem Fluidtank umgebende Fluid beheizt werden. Durch das Beheizen wird das Fluid aufgetaut beziehungsweise ein Einfrieren des Fluids verhindert. Besonders vorteilhaft ist es, wenn die Heizung im Bereich der Ansaugleitung angeordnet ist. Die Ansaugleitung dient dazu, das Fluid aus dem Filterraum des Filtergehäuses hinaus zu transportieren, nachdem es den Filter passiert hat.

Durch die Ansaugleitung kann demnach gefiltertes, also von Schmutzpartikeln weitestgehend befreites Fluid, entnommen werden. Um neben dem Entnehmen des Fluids durch die Ansaugleitung auch ein Zuführen des Fluids in das Gehäuse zu gewährleisten, ist es sinnvoll, die Heizung zusätzlich oder alternativ im Bereich des Zuführstutzens vorzusehen. Auf diese Weise wird das in dem Fluidtank befindliche Fluid zumindest in diesem Bereich aufgetaut, so dass es durch den Zuführstutzen in den Innenbereich des Gehäuses gelangen kann. Besonders vorteilhaft ist es, wenn die Heizung mit dem Gehäuse wärmegekoppelt ist, so dass von der Heizung erzeugte Wärme an das Gehäuse weitergegeben wird und in dem Gehäuse beziehungsweise in dessen Innenbereich befindliches Fluid ebenfalls aufgeheizt wird. Zu diesem Zweck kann es sinnvoll sein, das Gehäuse aus einem gut wärmeleitenden Material zu fertigen. Dagegen ist es üblicherweise sinnvoll, dass in dem Gehäuse angeordnete Filtergehäuse aus einem gut isolierenden Material herzustellen, um ein Einfrieren des Fluids im Bereich des Filters wenn möglich zu verhindern.

Die Erfindung wird nachfolgend anhand der in der Zeichnung dargestellten Ausführungsbeispiele näher erläutert, ohne dass eine Beschränkung der Erfindung erfolgt. Es zeigen:
Figur 1 eine aus dem Stand der Technik bekannte Fluidspeichereinrichtung,
Figur 2 eine erfindungsgemäße Fluidspeichereinrichtung, und
Figur 3 eine Detailansicht einer Unterseite eines Filtergehäuses, welches in einem Gehäuse der Fluidspeichereinrichtung angeordnet ist.

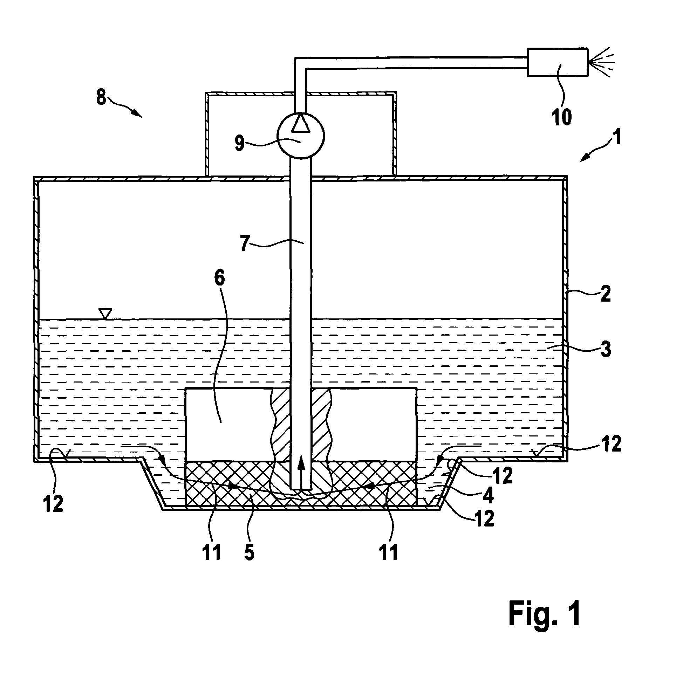

Die Figur 1 zeigt eine aus dem Stand der Technik bekannte Fluidspeichereinrichtung 1. Diese besteht aus einem Fluidtank 2, in welchem ein Fluid 3, beispielsweise ein Reduktionsmittel, lagerbar ist. In einer Vertiefung 4 des Fluidtanks 2 ist ein Filter 5 angeordnet, welchem eine Heizung 6 zugeordnet ist. Mittels der Heizung 6 sind sowohl der Filter 5 als auch eine Ansaugleitung 7, welche als Sauglanze ausgebildet ist, beheizbar. Über die Ansaugleitung 7 ist durch den Filter 5 Fluid 3 aus dem Fluidtank 2 beziehungsweise der Vertiefung 4 mittels eines Fördermittels 8 ansaugbar. Das Fördermittel 8 weist zu diesem Zweck beispielsweise eine Pumpe 9 auf. Über die Pumpe 9 wird das durch die Ansaugleitung 7 angesaugte Fluid 3 einer Dosiereinrichtung 10 zugeführt, mittels welcher das Fluid 3 in eine weitere Einrichtung, beispielsweise einen hier nicht dargestellten Abgastrakt einer Brennkraftmaschine, einbringbar ist. Die Dosiereinrichtung 10 ist dabei zum dosierten, also gesteuerten und/oder geregelten, Einbringen des Fluids 3 vorgesehen. Die Dosiereinrichtung 10 weist insofern beispielsweise ein Dosierventil auf. Ein Strömungsweg des durch die Ansaugleitung 7 angesaugten Fluids ist durch Pfeile 11 angedeutet. Ein Boden 12 des Fluidtanks 2 liegt, wie in der Figur 1 angedeutet, sowohl innerhalb als auch außerhalb der Vertiefung 4 vor. Der Boden 12 bildet also eine Begrenzung des Fluidtanks 2 nach unten. Der Filter 5 sitzt dabei unmittelbar auf dem Boden 12 in der Vertiefung 4 auf.

Die Vertiefung 4 bildet dabei den tiefsten Ort des Fluidtanks 2. Schmutzpartikel, welche sich möglicherweise in dem Fluid 3 befinden, werden sich aus diesem Grund bevorzugt in der Vertiefung 4 absetzen. Beim Ansaugen des Fluids 3 durch die Ansaugleitung 7 beziehungsweise den Filter 5 kann es dabei vorkommen, dass Schmutzpartikel von dem angesaugten Fluid 3 in Richtung des Filters 5 mitgerissen werden. Diese Schmutzpartikel setzen sich auf dem Filter 5 ab und können diesen verstopfen. Das bedeutet, dass zunächst der Druckverlust über den Filter 5 stark ansteigt und - bei starker Verschmutzung - kein Fluid 3 durch den Filter 5 mehr gelangen kann. In einem solchen Fall ist ein Wechsel beziehungsweise eine Reinigung des Filters 5 angezeigt.

Es ist aus der Figur 1 ohne weiteres zu entnehmen, dass das Fluid im wesentlichen in radialer Richtung durch den Filter 5 angesaugt wird. Um bei gleich bleibendem Druckverlust die ansaugbare Menge des Fluids 3 pro Zeiteinheit zu erhöhen, muss der Filter 5 daher in radialer Richtung vergrößert werden. Einer Vergrößerung steht jedoch die notwendige Eisdruckfestigkeit des Filters 5 entgegen. Wenn der Filter 5 zu groß baut, so kann es vorkommen, dass er durch Gefrieren des Fluids 3 beziehungsweise ablaufende Auftau- und Wiedereinfrierzyklen beschädigt wird. Aus diesem Grund muss der Filter unterhalb einer bestimmten Baugröße bleiben.

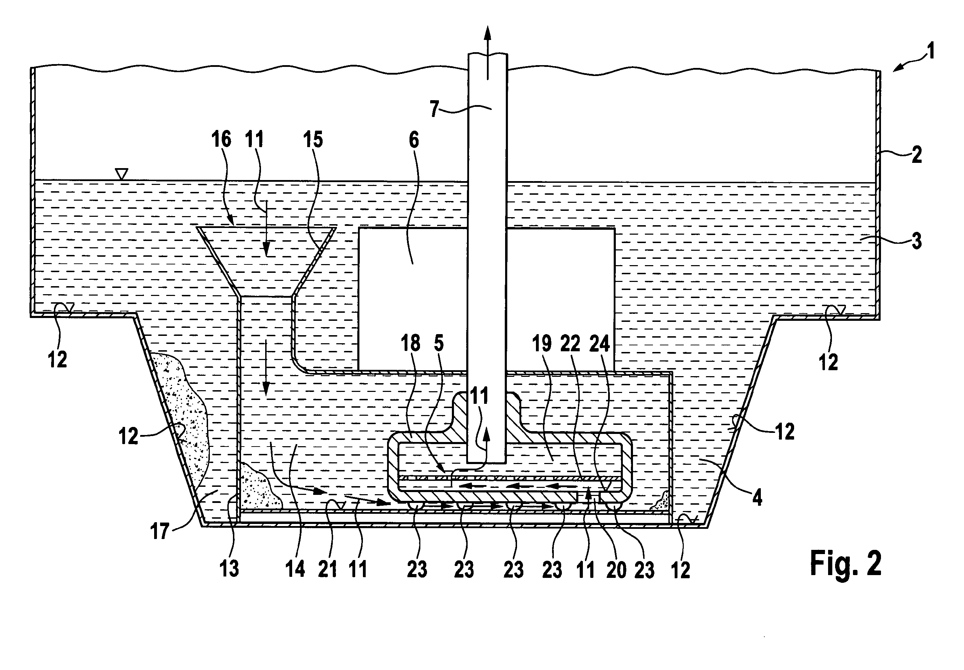

Die Figur 2 zeigt eine erfindungsgemäße Fluidspeichereinrichtung 1. Mit dieser bietet sich die Möglichkeit, bei gleich bleibender Größe des Filters 5 den möglichen Durchsatz pro Zeiteinheit zu erhöhen und gleichzeitig Verschmutzungen des Filters 5 durch Schmutzpartikel zu verhindern. Die Elemente der in der Figur 2 dargestellten Fluidspeichereinrichtung 1 entsprechen im wesentlichen denen der in der Figur 1 gezeigten. Sie sind aus diesem Grund mit denselben Bezugszeichen versehen. Das Fördermittel 8 mit der Pumpe 9 und die Dosiereinrichtung 10 sind nicht erneut dargestellt. Nichtsdestotrotz sind auch sie für die Anordnung der Figur 2 vorgesehen.

In dem Fluidtank 2 ist nun ein Gehäuse 13 mit einem Innenbereich 14 vorgesehen. Das Gehäuse 13 weist einen Zuführstutzen 15 auf, welcher zumindest bereichsweise trichterförmig ausgebildet ist. Auf seinem dem Gehäuse 13 abgewandten Ende weist der Zuführstutzen 15 eine Zuführöffnung 16 auf, durch welche Fluid aus dem Fluidtank 2 in den Innenbereich 14 zuführbar ist. Das Gehäuse 13 ist in der Vertiefung 4 angeordnet. Dabei ist jedoch die Zuführöffnung 16 beziehungsweise der Zuführstutzen 15 derart vorgesehen, dass die Zuführöffnung 16 außerhalb der Vertiefung 4 vorliegt. Sie ist demnach beabstandet von dem Boden 12, also bodenbeabstandet, angeordnet. Der Zuführstutzen 15 ragt aus der Vertiefung 4 hinaus. Besonders vorteilhaft, jedoch nicht notwendig, ist es, wenn der Zuführstutzen 15 beziehungsweise die Zuführöffnung 16 - wie in dem Ausführungsbeispiel der Figur 2 gezeigt - von dem Boden 12 weg zeigt. Üblicherweise ist es jedoch bereits ausreichend, wenn die Zuführöffnung 16 derart angeordnet ist, dass kein Bereich der Zuführöffnung 16 an dem Boden 12 angrenzt.

Die Vertiefung 4 ist im Querschnitt gesehen breiter ausgeführt als das Gehäuse 13. Auf diese Weise ist neben dem Gehäuse 13 in der Vertiefung 4 eine Schmutzpartikelaufnahmekammer 17 gebildet, welche das Gehäuse 13 vorteilhafterweise in Umfangsrichtung umgreift. Dabei ist das Gehäuse 13 beispielsweise kreisförmig. Die Schmutzpartikelaufnahmekammer 17 dient dazu, Schmutzpartikel, welche sich aus dem Fluid 3 abgesetzt haben, aufzunehmen und zu halten. Sie bildet demnach eine Schmutzfalle für diese Schmutzpartikel. Anders als bei der anhand der Figur 1 gezeigten Fluidspeichereinrichtung 1 wird die Vertiefung 4 beziehungsweise die Schmutzpartikelaufnahmekammer 17 nicht von dem Fluid 3 durchströmt, um durch die Ansaugleitung 7 gefördert zu werden. Die in der Schmutzpartikelaufnahmekammer 17 befindlichen Schmutzpartikel gelangen demnach nicht ohne weiteres wieder aus ihr hinaus. Die Wirkung der Schmutzpartikelaufnahmekammer 17 wird durch die Trichterform des Zuführstutzens 15 verstärkt. Eventuell aus der Schmutzpartikelaufnahmekammer 17 in Richtung der Zuführöffnung 16 wandernde Schmutzpartikel werden durch die Trichterform in lateraler Richtung abgelenkt beziehungsweise daran gehindert, bis zu der Zuführöffnung 16 aufzusteigen. Das entlang der Pfeile 11 durch die Zuführöffnung 16 beziehungsweise den Zuführstutzen 15 in den Innenbereich 14 des Gehäuses 13 gelangende Fluid ist somit bereits von einem Großteil der Schmutzpartikel befreit.

Dabei gelang das Fluid 3, wie durch die Pfeile 11 angedeutet, durch eine Einströmöffnung 20 aus dem Innenbereich 14 des Gehäuses 13 in den Filterraum 19. Die Einströmöffnung 20 ist dabei wiederum bodenbeabstandet angeordnet, also von einem Boden 21 des Gehäuses 13 beabstandet vorgesehen. Über die Einströmöffnung 20 ist eine Fluidverbindung zwischen dem Innenbereich 14 des Gehäuses 13 und den Filterraum 19 des Filtergehäuses 18 hergestellt. In dem Filterraum 19 ist ein Prallelement 22 vorgesehen, welches beispielsweise als Prallplatte ausgebildet ist. Die Einströmöffnung 20 und das Prallelement 22 sind derart zueinander ausgerichtet, dass durch die Einströmöffnung 20 in den Filterraum 19 einströmendes Fluid auf das Prallelement 22 auftritt. Dabei ist bevorzugt ein senkrechtes Auftreffen vorgesehen. Das Prallelement 22 ist strömungstechnisch vor dem Filter 5 vorgesehen, so dass das Fluid 3 erst nach dem Auftreffen auf das Prallelement 22 den Filter 5 durchläuft.

Die Bodenbeabstandung des Filtergehäuses 18 ist mittels mehrerer Standfüße 23 realisiert. Diese sind bevorzugt noppenartig beziehungsweise kegelstumpfförmig ausgebildet, weisen also von dem Filtergehäuse 18 hin zu dem Gehäuse 13 abnehmende Abmessungen auf. Die Standfüße 23 befinden sich dabei bevorzugt in einem Strömungsweg des Fluids 3, welches dieses hin zu der Einströmöffnung 20 zurückgelegt. Dabei ist die Einströmöffnung 20 in lateraler Richtung auf der der Zuführöffnung 16 abgewandten Seite des Filtergehäuses 18 vorgesehen.

Zusammenfassend ist das Gehäuse 13 bis auf den obenliegenden trichterförmigen Zuführstutzen 15 beziehungsweise die Zuführöffnung 16 geschlossen. Durch die Zuführöffnung 16 kann der in der Vertiefung 4 gesammelte Schmutz nicht in das Gehäuse 13 gelangen. Der Innenbereich 14 des Gehäuses 13 weist in etwa ein Volumen von 0,2 I auf, ist also deutlich kleiner als der Fluidtank 2 selbst. Das Filtergehäuse 18 ist ebenso, abgesehen von der bodenseitigen Zuführöffnung 16, geschlossen. Das Filtergehäuse 18 sitzt nahezu auf dem Boden 21 des Gehäuses 13 auf. Lediglich die Standfüße 23, beispielsweise runde Noppen von etwa 0,3 bis 0,5 mm Höhe, beabstanden das Filtergehäuse 18 von dem Boden 21. Auf diese Weise ist zwischen dem Filtergehäuse 18 und dem Boden 21 ein Drosselspalt gebildet, durch den das Fluid 3 zu der Einströmöffnung 20 gelangen kann. Dieser Drosselspalt stellt eine Blende dar, welche bei großen Abmessungen des Filters 5 eine große Fläche aufweist, womit sich eine geringe Strömungsgeschwindigkeit des Fluids 3 einstellt. Die Strömungsgeschwindigkeit nimmt hin zu der Einströmöffnung 20 des Filtergehäuses 18 zu. Durch die geringe Strömungsgeschwindigkeit zu Beginn werden die Schmutzpartikel nicht mitgerissen. Die Standfüße 23 bewirken, dass in unmittelbarer Nähe der Standfüße 23 eine höhere Strömungsgeschwindigkeit vorliegt, als beabstandet von diesen.

Dieser Unterschied in der Strömungsgeschwindigkeit bewirkt wiederum, dass sich die Schmutzpartikel ablagern, also aus dem Fluid 3 abgeschieden werden. Die Einströmöffnung 20 des Filtergehäuses 18 bildet eine nach oben gerichtete Drossel mit einem Durchmesser von etwa 1 bis 1,5 mm. Die Einströmöffnung 20 lenkt das Fluid 3 gegen das Prallelement 22, eine undurchlässige Platte. Zum Einströmen in die Einströmöffnung 20 muss, wie anhand der Figur 2 zu erkennen ist, das Fluid 3 seine Richtung um etwa 90° ändern. Durch das Prallelement 23 wird die Strömungsrichtung des Fluids 3 ein weiteres Mal um 90° umgelenkt. Diese zweimalige Umlenkung des Fluids 3 jeweils um etwa 90° bewirkt, dass lange Schmutzpartikel verhaken und nur vereinzelt in Richtung des Filters 5 weiter transportiert werden. Durch die geringe Höhe zwischen Prallelement 22 und einem Boden 24 des Filtergehäuses 18 werden die langen Schmutzpartikel parallel zu dem Filter 5 bewegt. Aufgrund der nun wieder geringen Strömungsgeschwindigkeit lagern sie sich auf dem Boden 24 des Filtergehäuses 18 vor dem Filter 5 ab.

Damit besteht die Fluidspeichereinrichtung 1 aus einer Kombination von Fluidtank 2 mit dem Gehäuse 13 und dem Filtergehäuse 18, in welchen das Fluid 3 bereits beruhigt ist. Zusätzlich sind Bereiche mit Drosseln und plötzlichen Umlenkungen vorgesehen. Dadurch ergibt sich ein Wechsel in der Strömungsgeschwindigkeit und der Strömungsrichtung.

Kleine Schmutzpartikel werden sich hauptsächlich in der Schmutzpartikelaufnahmekammer 17 und auf dem Boden 21 des Gehäuses 13 absetzen. Lange Schmutzpartikel, beispielsweise Fasern, verfangen sich in den plötzlichen Umlenkungen oder werden durch die Strömung des Fluids 3 gezielt ausgerichtet, so dass sie nicht durch den Filter 5 hindurch gehen, sondern von diesem gefiltert werden.

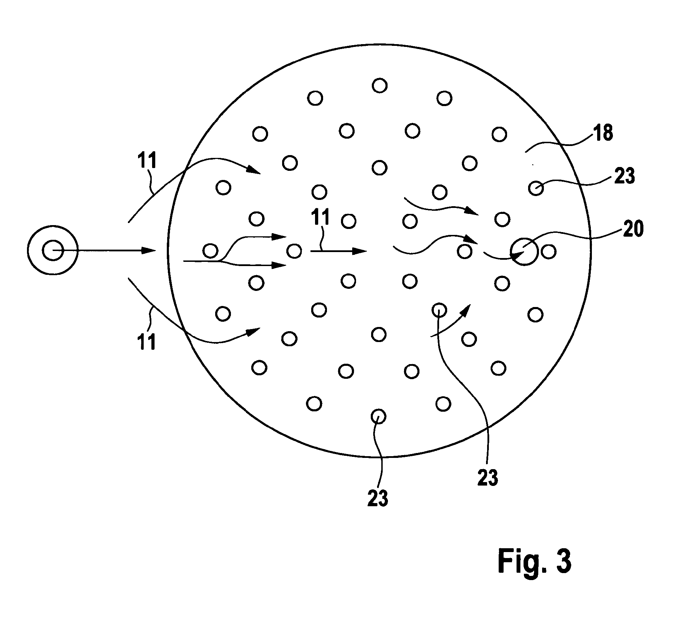

Die Figur 3 zeigt eine Detailansicht des Filtergehäuses 18 von unten. Dabei ist die Einströmöffnung 20 sowie die diese umgebenden Standfüße 23 (von welchen lediglich einige beispielhaft mit Bezugszeichen versehen wurden) zu erkennen. Die Strömungsrichtung ist erneut durch die Pfeile 11 angedeutet, wobei auch hier lediglich ein Teil der Pfeile mit Bezugszeichen versehen wurden.

Die Fluidspeichereinrichtung 1 ist bevorzugt Bestandteil einer Abgasreinigungseinrichtung, wobei das Fluid ein Reduktionsmittel ist.

## Patentansprüche

1. Fluidspeichereinrichtung (1) zur Speicherung eines Fluids (3), insbesondere Reduktionsmittels, mit einem Fluidtank (2) und einem Filter (5) zur Filtration eines in dem Fluidtank (2) bevorratbaren Fluids (3), wobei der Filter (5) in einem Innenbereich (14) eines in dem Fluidtank (2) angeordneten Gehäuses (13) vorgesehen ist und das Gehäuse (13) mindestens eine Zuführöffnung (16) zur Zuführung von Fluid (3) aus dem Fluidtank (2) in den Innenbereich (14) aufweist, wobei die Zuführöffnung (16) in dem Fluidtank (2) bodenbeabstandet angeordnet ist, **dadurch gekennzeichnet, dass** der Filter (5) in einem Filterraum (19) eines Filtergehäuses (18) angeordnet ist, welches in dem Gehäuse (13) vorgesehen ist, und wobei das Filtergehäuse (18) eine Einströmöffnung (20) aufweist, über welche der Filterraum (19) des Filtergehäuses (18) mit dem Innenbereich (14) des Gehäuses (13) fluidverbunden ist, wobei die Einströmöffnung (20) bodenbeabstandet ist und wobei das Filtergehäuse (18) zur Bodenbeabstandung der Einströmöffnung (20) mindestens einen Standfuß (23) aufweist und wobei die Einströmöffnung (20), insbesondere in lateraler Richtung, auf der der Zuführöffnung (16) abgewandten Seite des Filtergehäuses (18) oder zentral an dem Filtergehäuse (18) vorgesehen ist und wobei die Einströmöffnung (20) derart ausgebildet ist, dass in den Filterraum (19) einströmendes Fluid (3) auf ein Prallelement (22) gerichtet ist, welches strömungstechnisch vor dem Filter (5) angeordnet ist.

2. Fluidspeichereinrichtung nach Anspruch 1, **dadurch gekennzeichnet, dass** die Zuführöffnung (16) an einem, insbesondere trichterförmig ausgebildeten, Zuführstutzen (15) des Gehäuses (13) vorgesehen ist.

3. Fluidspeichereinrichtung nach einem der vorhergehenden Ansprüche, **dadurch gekennzeichnet, dass** das Gehäuse (13) in einer Vertiefung (4) des Fluidtanks (2) angeordnet ist.

4. Fluidspeichereinrichtung nach Anspruch 3, **dadurch gekennzeichnet, dass** die Vertiefung (4) im Querschnitt gesehen breiter ist als das Gehäuse (13), wobei eine Schmutzpartikelaufnahmekammer (17) gebildet ist.

5. Fluidspeichereinrichtung nach einem der vorhergehenden Ansprüche, **gekennzeichnet durch** eine Heizung (6) welche an dem Gehäuse (13), insbesondere im Bereich einer Ansaugleitung (7) und/oder des Zuführstutzens (15), angeordnet ist.

## Claims

1. Fluid storage device (1) for storing a fluid (3), in particular reducing agent, having a fluid tank (2) and having a filter (5) for the filtration of a fluid (3) that can be stored in the fluid tank (2), wherein the filter (3) is provided in an internal region (14) of a housing (13) arranged in the fluid tank (2), and the housing (13) has at least one feed opening (16) for the feed of fluid (3) from the fluid tank (2) into the internal region (14), wherein the feed opening (16) is arranged in the fluid tank (2) so as to be spaced apart from a base, **characterized in that** the filter (5) is arranged in a filter chamber (19) of a filter housing (18) that is provided in the housing (13), and wherein the filter housing (18) has an inflow opening (20) via which the filter chamber (19) of the filter housing (18) is fluidically connected to the internal region (14) of the housing (13), wherein the inflow opening (20) is spaced apart from the base and wherein the filter housing (18) has at least one pedestal (23) for the purpose of spacing the inflow opening (20) apart from the base, and wherein the inflow opening (20) is provided, in particular in a lateral direction, on that side of the filter housing (18) which is remote from the feed opening (16) or centrally on the filter housing (18), and wherein the inflow opening (20) is designed such that fluid (3) flowing into the filter chamber (19) is directed toward an impingement element (22) which is arranged upstream of the filter (5) in terms of flow.

2. Fluid storage device according to Claim 1, **characterized in that** the feed opening (16) is provided on a feed pipe (15), which is in particular of funnelshaped form, of the housing (13).

3. Fluid storage device according to one of the preceding claims, **characterized in that** the housing (13) is arranged in a depression (4) of the fluid tank (2).

4. Fluid storage device according to Claim 3, **characterized in that** the depression (4) is wider than the housing (13) in terms of cross section, wherein a dirt particle collecting chamber (17) is formed.

5. Fluid storage device according to one of the preceding claims, **characterized by** a heater (6) which is arranged on the housing (13), in particular in the region of a suction line (7) and/or of the feed pipe (15).

## Revendications

1. Dispositif de stockage de fluide (1) pour stocker un fluide (3), en particulier un agent réducteur, comprenant un réservoir de fluide (2) et un filtre (5) pour la filtration d'un fluide (3) pouvant être stocké dans le réservoir de fluide (2), le filtre (5) étant prévu dans une région interne (14) d'un boîtier (13) disposé dans le réservoir de fluide (2) et le boîtier (13) présentant au moins une ouverture d'alimentation (16) pour alimenter du fluide (3) depuis le réservoir de fluide (2) dans la région interne (14), l'ouverture d'alimentation (16) étant disposée à distance du fond dans le réservoir de fluide (2), **caractérisé en ce que** le filtre (5) est disposé dans un espace de filtre (19) d'un boîtier de filtre (18) qui est prévu dans le boîtier (13), et le boîtier de filtre (18) présentant une ouverture d'afflux (20) par le biais de laquelle l'espace de filtre (19) du boîtier de filtre (18) est connecté fluidiquement à la région interne (14) du boîtier (13), l'ouverture d'afflux (20) étant espacée du fond et le boîtier de filtre (18) présentant, en vue de l'espacement du fond de l'ouverture d'afflux (20), au moins un pied (23) et l'ouverture d'afflux (20), en particulier dans la direction latérale, étant prévue du côté du boîtier de filtre (18) opposé à l'ouverture d'alimentation (16) ou centralement au niveau du boîtier de filtre (18) et l'ouverture d'afflux (20) étant réalisée de telle sorte que du fluide (3) entrant dans l'espace de filtre (19) soit orienté sur un élément d'incidence (22) qui est disposé en amont du filtre (5) du point de vue de la technique de l'écoulement.

2. Dispositif de stockage de fluide selon la revendication 1, **caractérisé en ce que** l'ouverture d'alimentation (16) est prévue au niveau d'une tubulure d'alimentation (15) du boîtier (13) notamment réalisée en forme d'entonnoir.

3. Dispositif de stockage de fluide selon l'une quelconque des revendications précédentes, **caractérisé en ce que** le boîtier (13) est disposé dans un renfoncement (4) du réservoir de fluide (2) .

4. Dispositif de stockage de fluide selon la revendication 3, **caractérisé en ce que** le renfoncement (4), vu en section transversale, est plus large que le boîtier (13), une chambre de réception de particules de saleté (17) étant formée.

5. Dispositif de stockage de fluide selon l'une quelconque des revendications précédentes, **caractérisé par** un chauffage (6) qui est disposé au niveau du boîtier (13), en particulier dans la région d'une conduite d'aspiration (7) et/ou de la tubulure d'alimentation (15).
